# EUROPÄISCHE PATENTANMELDUNG

(11) **EP 2 887 335 A1**
(43) Veröffentlichungstag der Anmeldung: **24.06.2015**
(21) Anmeldenummer: 14197085.5
(22) Anmeldetag: 10.12.2014
(51) Int. Cl.: G08G 1/16, B60W 50/14, B60W 30/095

(54) **Verfahren zum Warnen eines Fahrers eines Kraftfahrzeugs vor einer Kollisionsgefahr durch Ausgeben eines nicht-optischen Warnsignals, Kollisionswarnungssystem und Kraftfahrzeug**

(30) Priorität: 21.12.2013 DE 102013021827
(71) Anmelder: Valeo Schalter und Sensoren GmbH, 74321 Bietigheim-Bissingen (DE)
(72) Erfinder: Kossmann, Simon, 74321 Bietigheim-Bissingen (DE); Geiger, Tobias, 74321 Bietigheim-Bissingen (DE); Bammert, Jens, 74321 Bietigheim-Bissingen (DE)

(57) **Zusammenfassung**

Die Erfindung betrifft ein Verfahren zum Warnen des Fahrers eines Kraftfahrzeugs (1) vor einer Kollisionsgefahr durch Ausgeben eines nicht-optischen Warnsignals mittels eines Kollisionswarnungssystems des Kraftfahrzeugs (1), wobei durch das Kollisionswarnungssystem ein aktueller Lenkwinkel des Kraftfahrzeugs (1) erfasst wird und abhängig von dem aktuellen Lenkwinkel ein virtueller Fahrschlauch (13) bestimmt wird, welcher durch das Kraftfahrzeug (1) bei dem aktuellen Lenkwinkel voraussichtlich durchfahren wird, und wobei zum Ausgeben des nicht-optischen Warnsiglials innerhalb des Fahrschlauchs (13) detektierte Objekte (17) durch das Kollisionswarnungssystern berücksichtigt werden, wobei zusätzlich zu dem Fahrschlauch (13) ein virtueller Überwachungsbereich (20) in einem Eckbereich (19) des Kraftfahrzeugs (1) bestimmt wird und das nicht-optische Warnsignal auch bei Fehlen eines Objekts (17) innerhalb des Fahrschlauchs (13) dann ausgegeben wird, wenn innerhalb des zusätzlichen Überwachungsbereichs (20) ein Objekt (17) durch das Kollisionswarnungssystem (2) detektiert wird.

## Beschreibung

Die Erfindung betrifft ein Verfahren zum Warnen des Fahrers eines Kraftfahrzeugs vor einer Kollisionsgefahr durch Ausgeben eines nicht-optischen Warnsignals mittels eines Kollisionswarnungssystems eines Kraftfahrzeugs, wobei durch das Kollisionswarnungssystem ein aktueller Lenkwinkel des Kraftfahrzeugs erfasst wird und abhängig von dem aktuellen Lenkwinkel ein virtueller Fahrschlauch bestimmt wird, welcher durch das Kraftfahrzeug bei dem aktuellen Lenkwinkel voraussichtlich durchfahren wird, und wobei zum Ausgeben des nicht-optischen Warnsignals innerhalb des Fahrschlauchs detektierte Objekte durch das Kollisionswarnungssystem berücksichtigt werden. Die Erfindung betrifft außerdem ein Kollisionswarnungssystem für ein Kraftfahrzeug sowie ein Kraftfahrzeug mit einem Kollisionswarnungssystem.

Kollisionswarnungssysteme für Kraftfahrzeuge sind bereits Stand der Technik und dienen zum Warnen des Fahrers vor einer Kollisionsgefahr mit einem fahrzeugexternen Objekt. Um den Fahrer auf die detektierte Kollisionsgefahr hinweisen zu können, wird durch die Kollisionswarnungssysteme ein akustisches Warnsignal ausgegeben, mit welchem die Kollisionsgefahr dem Fahrer signalisiert wird. Eine besondere Herausforderung bei solchen Kollisionswarnungssystemen mit einer akustischen Ausgabe besteht darin, eine Abwägung dahingehend vorzunehmen, wann genau bzw. in welchen Situationen das Warnsignal ausgegeben werden soll. Zum einen soll der Fahrer möglichst frühzeitig und zuverlässig auf die Kollisionsgefahr hingewiesen werden. Andererseits soll bei solchen Systemen auch verhindert werden, dass der Fahrer durch die Ausgabe des akustischen Warnsignals unnötig belästigt wird. Einen Kompromiss bietet hier ein Verfahren, bei welchem eine so genannte Fahrschlauchfilterung der fahrzeugexternen Objekte durchgeführt wird. Abhängig von dem aktuellen Lenkwinkel wird dabei ein virtueller Fahrschlauch bestimmt, d.h. eine voraussichtliche Trajektorie des Kraftfahrzeugs, die sich bei dem aktuellen Lenkwinkel einstellt und bei dem gegebenen Lenkwinkel voraussichtlich durch das Kraftfahrzeug durchfahren wird. Dieser Fahrschlauch berücksichtigt dabei den gesamten Breitenbereich, welcher durch das Kraftfahrzeug bei dem aktuellen Lenkwinkel durchfahren würde. Innerhalb des Fahrschlauchs ist eine kollisionsfreie Bewegung des Kraftfahrzeugs also nur bei Fehlen von Objekten innerhalb des Fahrschlauchs möglich. Bei der Fahrschlauchfilterung wird bestimmt, ob sich die detektierten Objekte innerhalb des Fahrschlauchs befinden oder nicht. Wird innerhalb des Fahrschlauchs ein Objekt detektiert, so wird das akustische Warnsignal ausgegeben.

Die Bereitstellung eines virtuellen Fahrschlauchs ist beispielsweise aus dem Dokument DE 10 2005 004 394 B4 bekannt.

Ein Kollisionswarnungssystem ist aus dem Dokument DE 101 28 792 A1 bekannt. Durch Sensoren des Kraftfahrzeugs werden dabei Bereiche der räumlichen Umgebung des Fahrzeugs erfasst und deren Signale durch eine Datenverarbeitungseinrichtung für eine Berechnung des vorhandenen hindernisfreien Fahrraums ausgewertet. Andere Sensoren erfassen zusätzlich die Lage und Position aller beweglichen Fahrzeugteile, wie beispielsweise eines Anhängers, sowie dynamische Parameter der aktuellen Fahrsituation, wie beispielsweise die Geschwindigkeit, den Lenkwinkel und dergleichen. Aus diesen Informationen wird der bei Fortsetzung der Fahrt benötigte Fahrraum vorausberechnet und mit dem erfassten, tatsächlich vorhandenen hindernisfreien Fahrraum verglichen. Dieser Vergleich liefert eine frühzeitige Vorhersage einer möglichen Kollision, wobei der Fahrer durch entsprechende Warnsignale auf die Kollisionsgefahr hingewiesen wird.

Also wird im Stand der Technik einerseits der sich bei dem aktuellen Lenkwinkel des Kraftfahrzeugs einstellende Fahrschlauch bestimmt, welcher die voraussichtliche Trajektorie des Kraftfahrzeugs bei dem gegebenen Lenkwinkel beschreibt. Andererseits werden im Stand der Technik auch Objekte detektiert, und die Position der Objekte wird mit dem Fahrschlauch verglichen. Das Warnsignal wird nur dann ausgegeben, wenn die Präsenz eines Objekts innerhalb des Fahrschlauchs detektiert wird. Es hat sich nun herausgestellt, dass es bei einer solchen Fahrschlauchfilterung von Objekten bezüglich der akustischen Warnung Fahrsituationen gibt, bei denen ein potentiell gefährliches Objekt zu spät akustisch signalisiert wird. Insbesondere beim Verlassen einer Querparklücke rückwärts kann es vorkommen, dass ein die Parklücke seitlich begrenzendes Objekt - beispielsweise ein anderes Fahrzeug oder eine Wand - zu spät akustisch signalisiert wird. Die Aufmerksamkeit des Fahrers ist in solchen Situationen eher auf den rückwärtigen Bereich hinter dem Kraftfahrzeug gerichtet, sodass insbesondere die vorderen Eckbereiche des Kraftfahrzeugs nur unzureichend überwacht und geschützt werden.

Es ist Aufgabe der Erfindung, bei einem Verfahren der eingangs genannten Gattung Maßnahmen zu treffen, die gewährleisten, dass der Fahrer des Kraftfahrzeugs besonders zuverlässig auf die mögliche Kollision mit fahrzeugexternen Objekten beim Rangieren des Kraftfahrzeugs hingewiesen werden kann.

Diese Aufgabe wird erfindungsgemäß durch ein Verfahren, durch ein Kollisionswarnungssystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren wird der Fahrer eines Kraftfahrzeugs vor einer Kollisionsgefahr mithilfe eines Kollisionswarnungssystems des Kraftfahrzeugs gewarnt. Die Warnung erfolgt durch Ausgeben eines nicht-optischen Warnsignals, insbesondere eines akustischen und/oder haptischen Warnsignals. Durch das Kollisionswarnungssystem wird ein aktueller Lenkwinkel des Kraftfahrzeugs erfasst und abhängig von dem aktuellen Lenkwinkel, und insbesondere auch unter Berücksichtigung von abgelegten Fahrzeugabmessungen, ein virtueller Fahrschlauch bestimmt, welcher durch das Kraftfahrzeug bei dem aktuellen Lenkwinkel voraussichtlich durchfahren wird. Dieser Fahrschlauch stellt eine voraussichtliche Trajektorie des Kraftfahrzeugs dar, welche sich bei dem aktuellen Lenkwinkel momentan einstellt. Die Breite dieses Fahrschlauchs wird in Fahrzeugquerrichtung bevorzugt derart bestimmt, dass eine kollisionsfreie Bewegung des Kraftfahrzeugs entlang des Fahrschlauchs nur bei Fehlen von Objekten innerhalb des Fahrschlauchs möglich ist. Zum Ausgeben des nicht-optischen Warnsignals werden durch das Kollisionswarnungssystem innerhalb des Fahrschlauchs detektierte Objekte berücksichtigt. Das nicht-optische Warnsignal wird insbesondere ausgegeben, falls innerhalb des Fahrschlauchs ein Objekt durch das Kollisionswarnungssystem detektiert wird. Erfindungsgemäß ist vorgesehen, dass zusätzlich zu dem Fahrschlauch ein, insbesondere an das Kraftfahrzeug angrenzender, virtueller Überwachungsbereich in einem Eckbereich des Kraftfahrzeugs bestimmt wird und das nicht-optische Warnsignal auch bei Fehlen eines Objekts innerhalb des Fahrschlauchs dann ausgegeben wird, wenn innerhalb des zusätzlichen Überwachungsbereichs ein Objekt durch das Kollisionswarnungssystem detektiert wird.

Der Fahrer wird somit einerseits auf die innerhalb des Fahrschlauchs befindlichen Hindernisse hingewiesen; andererseits werden dem Fahrer auch Objekte signalisiert, welche sich in einem Überwachungsbereich befinden, welcher unabhängig von dem Fahrschlauch zu einem Eckbereich des Kraftfahrzeugs, insbesondere zu einem vorderen Eckbereich des Kraftfahrzeugs, definiert wird. Durch das erfindungsgemäße Verfahren wird der Fahrer insbesondere beim Verlassen einer Querparklücke rückwärts unterstützt. Beim Ausparken rückwärts ist die Aufmerksamkeit des Fahrers üblicherweise auf den rückwärtigen Bereich hinter dem Kraftfahrzeug gerichtet. Würde das Kollisionswarnungssystem nun ausschließlich diejenigen Objekte berücksichtigen, die sich innerhalb des Fahrschlauchs hinter dem Fahrzeug befinden, so würde der Fahrer nur unzureichend gewarnt, da sich die vorderen Eckbereiche des Fahrzeugs bei derartigen Situationen außerhalb des Fahrschlauchs befinden. Es könnte hier zu einer seitlichen Kollision eines der Eckbereiche des Kraftfahrzeugs mit einem die Parklücke begrenzenden Objekt kommen, beispielsweise einer Wand oder einem benachbarten Fahrzeug. Um solche Kollisionen zu vermeiden, wird bei dem erfindungsgemäßen Verfahren der zusätzliche Überwachungsbereich definiert, welcher durch das Kollisionswarnungssystem beim Rangieren des Kraftfahrzeugs auf die Präsenz von fahrzeugexternen Objekten überprüft wird. Wird ein Objekt innerhalb des Überwachungsbereichs detektiert, wird das nicht-optische Warnsignal auch dann ausgegeben, wenn keine Objekte innerhalb des Fahrschlauchs detektiert wurden. Somit können die relevanten Objekte frühzeitig dem Fahrer signalisiert werden.

Der Fahrschlauch wird abhängig von dem aktuellen Lenkwinkel des Kraftfahrzeugs bestimmt. Dieser Lenkwinkel kann insbesondere in Abhängigkeit von einem aktuellen Lenkradwinkel und/oder abhängig von der aktuellen Position einer Spurstange des Kraftfahrzeugs bestimmt werden, welcher bzw. welche mittels eines entsprechenden Sensors erfasst werden kann. Zur Bestimmung des aktuellen Fahrschlauchs werden bevorzugt auch Fahrzeugabmessungen berücksichtigt, wie insbesondere die Breite des Kraftfahrzeugs.

Zur Detektion von fahrzeugexternen Objekten kann das Kollisionswarnungssystem eine Detektionseinrichtung umfassen. Diese Detektionseinrichtung kann zumindest einen Abstandssensor, insbesondere zumindest einen Ultraschallsensor und/oder zumindest einen Radarsensor und/oder zumindest einen Lidarsensor, und/oder zumindest eine Kamera umfassen, welche Bilder der Umgebung des Kraftfahrzeugs bereitstellt. Insbesondere können mehrere Abstandssensoren an dem Kraftfahrzeug verteilt angeordnet sein, vorzugsweise mehrere Abstandssensoren sowohl am vorderen Stoßfänger als auch am hinteren Stoßfänger. Zumindest ein Abstandssensor kann an der jeweiligen Seitenflanke des Kraftfahrzeugs angeordnet sein, um Abstände zu Objekten zu erfassen, die sich in seitlichen Bereichen neben dem Kraftfahrzeug befinden. Die Sensorachse, welche die Erfassungsrichtung des Sensors definiert, ist dann vorzugsweise entlang der Fahrzeugquerrichtung orientiert.

In einer Ausführungsform ist vorgesehen, dass der zusätzliche Überwachungsbereich in Abhängigkeit von dem aktuellen Lenkwinkel festgelegt wird. Der Überwachungsbereich ist somit vorzugsweise kein fester Bereich bezüglich des Kraftfahrzeugs, sondern wird situationsabhängig und bedarfsgerecht bestimmt. Somit wird der Fahrer durch das nicht-optische Warnsignal nur dann gewarnt, wenn dies tatsächlich auch erforderlich ist. Es können Situationen verhindert werden, in denen der Fahrer durch die Ausgabe des nicht-optischen Warnsignals unnötig belästigt wird.

Es hat sich dabei als besonders vorteilhaft erwiesen, wenn der zusätzliche Überwachungsbereich nur dann bestimmt oder zur Ausgabe des nicht-optischen Warnsignals berücksichtigt wird, wenn der aktuelle Lenkwinkel größer als ein vorgegebener Grenzwert ist. Ist der aktuelle Lenkwinkel kleiner als der Grenzwert, so werden somit ausschließlich diejenigen Objekte zur Ausgabe des nicht-optischen Warnsignals berücksichtigt, die sich innerhalb des Fahrschlauchs befinden. Diese Ausführungsform macht sich die Tatsache zunutze, dass eine Kollision mit seitlichen Hindernissen - insbesondere beim Rangieren rückwärts entlang einer Wand oder eines anderen Fahrzeugs - im Wesentlichen lediglich bei einem größeren Lenkwinkel möglich ist, nicht jedoch bei einem Lenkwinkel von 0° bzw. bei einer Geradeausfahrt. Somit wird die Ausgabe des Warnsignals in Situationen verhindert, in denen keine Kollision mit einem seitlichen Hindernis droht.

Die Festlegung des Überwachungsbereichs abhängig von dem aktuellen Lenkwinkel kann auch umfassen, dass zumindest eine Abmessung des zusätzlichen Überwachungsbereichs und/oder seine Position in Abhängigkeit von dem aktuellen Lenkwinkel festgelegt wird/werden. Somit wird die Größe des Überwachungsbereichs und/oder seine Position relativ zum Kraftfahrzeug abhängig von dem aktuellen Lenkwinkel bestimmt. Dadurch kann ein guter Kompromiss für die Häufigkeit der Ausgabe des Warnsignals erzielt werden.

Der Überwachungsbereich kann auch unter Berücksichtigung der aktuellen Fahrzeuggeschwindigkeit bestimmt werden. Beispielsweise kann bei einer größeren Geschwindigkeit ein größerer Überwachungsbereich als bei einer geringeren Geschwindigkeit definiert werden.

Vorzugsweise erfolgt das Detektieren des Objekts innerhalb des zusätzlichen Überwachungsbereichs mittels eines an einer Seitenflanke des Kraftfahrzeugs angeordneten Abstandssensors, beispielsweise eines Ultraschallsensors. Ein derartiger Abstandssensor kann beispielsweise im vorderen Bereich der Seitenflanke angeordnet sein, zum Beispiel an einem Kotflügel oder im Randbereich eines Stoßfängers. Die Erfassungsrichtung des Abstandssensors fällt dann vorzugsweise mit der Fahrzeugquerrichtung zusammen. Mittels eines derartigen Abstandssensors, welcher an der Seitenflanke des Kraftfahrzeugs angeordnet ist, können Objekte detektiert werden, die sich im Eckbereich und seitlich neben dem Kraftfahrzeug befinden. Gerade solche Hindernisse stellen eine potentielle Gefahr dar, wenn das Kraftfahrzeug beispielsweise rückwärts aus einer Parklücke ausgeparkt wird.

Wie bereits ausgeführt, hat es sich als vorteilhaft erwiesen, wenn der zusätzliche Überwachungsbereich zumindest bei einer Rückwärtsfahrt des Kraftfahrzeugs bestimmt wird. Gerade dann befinden sich die beiden vorderen Eckbereiche des Kraftfahrzeugs außerhalb des Fahrschlauchs und sollen daher zusätzlich überwacht werden. Hier kann der Überwachungsbereich zu einem vorderen Eckbereich des Kraftfahrzeugs definiert werden.

Hinsichtlich der Bestimmung des Überwachungsbereichs können zwei alternative Ausführungsformen vorgesehen sein:

Als Überwachungsbereich kann ein an eine Seitenflanke des Kraftfahrzeugs angrenzender, insbesondere rechteckiger, Bereich definiert werden, dessen Breite in Fahrzeugquerrichtung insbesondere in Abhängigkeit von dem aktuellen Lenkwinkel eingestellt wird. Durch einen derartigen Bereich, welcher an die Seitenflanke des Kraftfahrzeugs angrenzt, können seitliche Kollisionen des Kraftfahrzeugs beim Rangieren entlang eines länglichen Objekts verhindert werden.

Alternativ kann das nicht-optische Kollisionswarnungssystem mit einem optischen System kombiniert werden: Zu dem Kraftfahrzeug kann eine Vielzahl von um das Kraftfahrzeug verteilten, und insbesondere an das Kraftfahrzeug angrenzenden, Sektoren definiert werden, welche bevorzugt eine feste Größe aufweisen. Nach Detektion eines Objekts in einem der Sektoren kann eine Information über diese Detektion mittels einer optischen Ausgabeeinrichtung des Kraftfahrzeugs optisch ausgegeben werden, etwa auf einem Display. Für den zusätzlichen Überwachungsbereich kann dann zumindest einer der bereits vorhandenen Sektoren des optischen Systems ausgewählt werden, wobei der zusätzliche Überwachungsbereich als ein Teilbereich des ausgewählten Sektors bestimmt wird. Für die Bestimmung des Überwachungsbereichs wird hier ein optisches System verwendet, bei welchem mehrere Sektoren, insbesondere fester Größe, um das Kraftfahrzeug definiert sind und die in diesen Sektoren detektierten Objekte optisch auf einer optischen Ausgabeeinrichtung - beispielsweise einem Display - angezeigt werden. Dieses System wird nun auch zur Bestimmung des Überwachungsbereichs genutzt, indem einer der Sektoren ausgewählt wird und der zusätzliche Überwachungsbereich als eine Teilregion des ausgewählten Sektors bestimmt wird. Eine solche Kombination des nicht-optischen Kollisionswarnungssystems mit dem optischen System hat den Vorteil, dass zur Detektion von Objekten innerhalb des Überwachungsbereichs die ohnehin vorhandenen Sensoren des optischen Systems und die ohnehin bereits definierten Sektoren genutzt werden können.

Der zusätzliche Überwachungsbereich wird vorzugsweise als ein Teilbereich des ausgewählten Sektors bis zu einem Entfernungswert vom Kraftfahrzeug bestimmt, welcher in Abhängigkeit von dem aktuellen Lenkwinkel eingestellt wird. Es gilt dabei bevorzugt die Beziehung, dass, je größer der aktuelle Lenkwinkel ist, desto größer der Entfernungswert und somit auch größer der Überwachungsbereich ist. Beim größeren Lenkwinkel wird somit ein größerer Entfernungsbereich von dem Kraftfahrzeug als bei einem geringeren Lenkwinkel überwacht. Dies stellt einen zuverlässigen Kompromiss für die Häufigkeit der Ausgabe des nicht-optischen Warnsignals dar.

Vorzugsweise kann auch die Auswahl des zumindest einen Sektors in Abhängigkeit von dem aktuellen Lenkwinkel erfolgen. Dies kann beispielsweise derart vorgenommen werden, dass bei nach links eingeschlagenen Rädern des Kraftfahrzeugs ein Sektor auf der rechten Seite der Mittellängsachse des Kraftfahrzeugs ausgewählt wird, während bei nach rechts eingeschlagenen Rädern ein linker Sektor ausgewählt wird. Es kann somit derjenige Eckbereich des Kraftfahrzeugs geschützt werden, welcher einer möglichen Kollision mit einem fahrzeugexternen Objekt ausgesetzt ist.

Die Erfindung betrifft außerdem ein Kollisionswarnungssystem zum Warnen des Fahrers eines Kraftfahrzeugs vor einer Kollisionsgefahr, umfassend eine Detektionseinrichtung zum Detektieren eines fahrzeugexternen Objekts, umfassend eine nicht-optische Ausgabeeinrichtung zum Ausgeben eines nicht-optischen Warnsignals, und umfassend eine Steuereinrichtung, die dazu ausgelegt ist, abhängig von einem aktuellen lenkwinkel des Kraftfahrzeugs einen virtuellen Fahrschlauch zu bestimmen und die Ausgabeeinrichtung zum Ausgeben des nicht-optischen Warnsignals unter Berücksichtigung von innerhalb des Fahrschlauchs detektierten Objekten anzusteuern. Die Steuereinrichtung ist dazu ausgelegt, zusätzlich zu dem Fahrschlauch einen virtuellen

Überwachungsbereich in einem Eckbereich des Kraftfahrzeugs zu bestimmen und die Ausgabeeinrichtung zum Ausgeben des nicht-optischen Warnsignals auch bei Fehlen eines Objekts innerhalb des Fahrschlauchs dann anzusteuern, wenn innerhalb des zusätzlichen Überwachungsbereichs die Detektionseinrichtung ein Objekt detektiert.

Ein erfindungsgemäßes Kraftfahrzeug, insbesondere ein Personenkraftwagen, umfasst ein erfindungsgemäßes Kollisionswarnungssystem.

Die mit Bezug auf das erfindungsgemäße Verfahren vorgestellten bevorzugten Ausführungsformen und deren Vorteile gelten entsprechend für das erfindungsgemäße Kollisionswarnungssystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele sowie unter Bezugnahme auf die beigefügten Zeichnungen näher erläutert.

Es zeigen:
- Fig. 1: in schematischer Darstellung ein Kraftfahrzeug mit einem Kollisionswarnungssystem gemäß einer Ausführungsform der Erfindung;
- Fig. 2 und 3: in schematischer Darstellung das Kraftfahrzeug, wobei ein Verfahren gemäß einer ersten Ausführungsform der Erfindung näher erläutert wird; und
- Fig. 4: in schematischer Darstellung das Kraftfahrzeug, wobei ein Verfahren gemäß einer zweiten Ausführungsform der Erfindung näher erläutert wird.

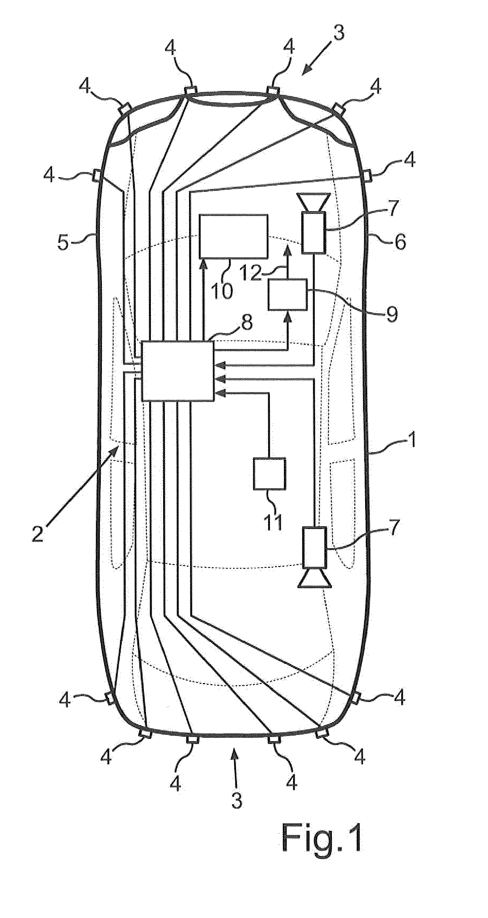

Ein in Fig. 1 dargestelltes Kraftfahrzeug 1 ist beispielsweise ein Personenkraftwagen. Das Kraftfahrzeug 1 umfasst ein Kollisionswarnungssystem 2, welches zum Warnen des Fahrers vor einer möglichen Kollision mit fahrzeugexternen Objekten ausgebildet ist. Das Kollisionswarnungssystem 2 umfasst eine Detektionseinrichtung 3, welche beispielsweise eine Vielzahl von Abstandssensoren 4, insbesondere Ultraschallsensoren, aufweist, weiche sowohl im Frontbereich als auch im Heckbereich des Kraftfahrzeugs 1 verteilt angeordnet sind. Mindestens ein Abstandssensor 4 ist dabei an einer linken Seitenflanke 5 angeordnet. Entsprechend ist auch mindestens ein Abstandssensor 4 an einer rechten Seitenflanke 6 des Kraftfahrzeugs 1 angeordnet. Optional kann die Detektionseinrichtung 3 auch mindestens eine Kamera 7 beinhalten, welche Bilder eines Umgebungsbereichs des Kraftfahrzeugs 1 bereitstellt. Es kann eine Frontkamera und/oder eine Rückansichtskamera eingesetzt werden.

Das Kollisionswarnungssystem 2 umfasst außerdem eine Steuereinrichtung 8, welche die Sensordaten der Detektionseinrichtung 3 empfängt. Die Steuereinrichtung 8 kann einen digitalen Signalprozessor zur Verarbeitung der Sensordaten umfassen. Durch die Steuereinrichtung 8 wird eine nicht-optische Ausgabeeinrichtung 9 angesteuert, welche beispielsweise einen Lautsprecher und/oder eine haptische Ausgabeeinrichtung bzw. einen Haptikaktuator umfassen kann. Optional kann die Steuereinrichtung 8 auch mit einer optischen Ausgabeeinrichtung 10 gekoppelt sein, welche insbesondere als ein Display ausgebildet ist. Die Steuereinrichtung 8 steuert dann auch diese optische Ausgabeeinrichtung 10 an.

Von einem Lenkwinkelsensor 11 empfängt die Steuereinrichtung 8 außerdem Informationen über den aktuellen Lenkwinkel des Kraftfahrzeugs 1. Bei dem Lenkwinkelsensor 11 kann es sich beispielsweise um einen Sensor handeln, welcher den aktuellen Lenkradwinkel und/oder die aktuelle Position einer Spurstange des Kraftfahrzeugs 1 erfasst. In der Steuereinrichtung 8 ist somit der jeweils augenblickliche Lenkwinkel des Kraftfahrzeugs 1 bekannt.

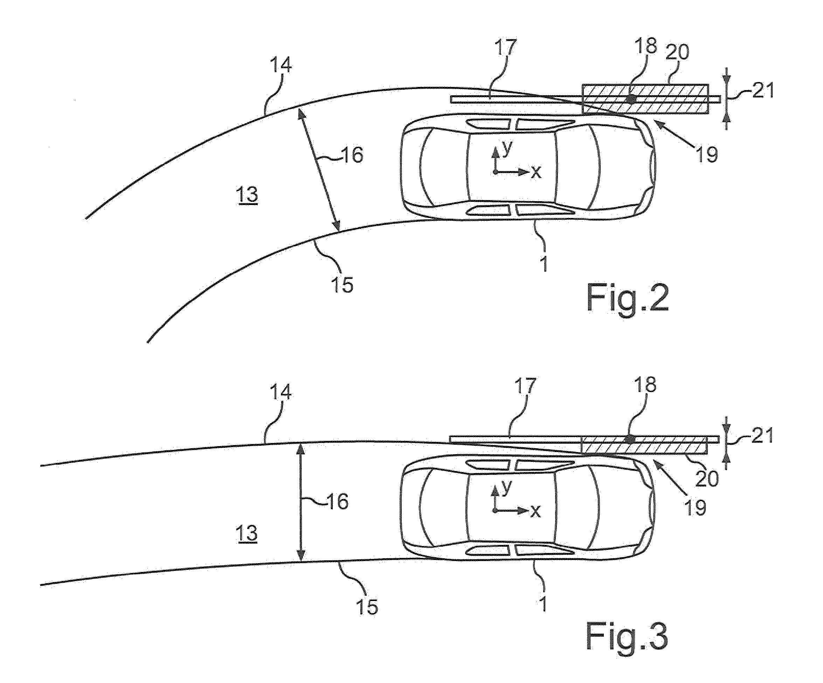

Nun richtet sich das Interesse auf die Ausgabe eines vom Fahrer wahrnehmbaren Warnsignals 12 mittels der nicht-optischen Ausgabeeinrichtung 9, beispielsweise eines akustischen Tons und/oder eines haptischen Signals. Bezug nehmend nun auf Fig. 2 kann die Steuereinrichtung 8 abhängig von dem aktuellen Lenkwinkel sowie unter Berücksichtigung von Fahrzeugabmessungen, welche in einem Speicher abgelegt sind, einen Fahrschlauch 13 bestimmen, d.h. eine voraussichtliche Trajektorie, welche bei dem aktuellen Lenkwinkel durch das Kraftfahrzeug 1 durchfahren würde. Dabei ist der Fahrschlauch 13 seitlich durch zwei Begrenzungslinien 14, 15 begrenzt, deren Krümmung im Wesentlichen einem Kurvenradius der durch das Kraftfahrzeug 1 befahrenen Kurve entspricht. Eine in Fahrzeugquerrichtung y bemessene Breite 16 des Fahrschlauchs 13 ist bei eingeschlagenen Rädern größer als die tatsächliche Breite des Kraftfahrzeugs 1 und ist so bemessen, dass ein kollisionsfreies Durchfahren des Kraftfahrzeugs 1 durch den Fahrschlauch 13 nur dann möglich ist, wenn sich innerhalb des Fahrschlauchs 13 keine Objekte bzw. keine Hindernisse befinden. Die Krümmung des Fahrstreifens 13 hängt dabei unmittelbar von dem aktuellen Lenkwinkel ab.

Im Stand der Technik werden zur Ausgabe des nicht-optischen Warnsignals 12 ausschließlich Objekte berücksichtigt, die sich innerhalb des Fahrstreifens 13 befinden. Beim Manövrieren des Kraftfahrzeugs 1 rückwärts entlang eines länglichen Objekts 17, das sich entlang der Fahrzeuglängsrichtung x erstreckt, beispielsweise entlang einer Wand oder eines anderen Fahrzeugs, wird im Stand der Technik somit ein Bereich 18 dieses Objekts 17 nicht berücksichtigt, der sich in einem vorderen Eckbereich 19 (im Ausführungsbeispiel gemäß Fig. 2 im vorderen linken Eckbereich) des Kraftfahrzeugs 1 befindet. Da dieser Bereich 18 außerhalb des Fahrschlauchs 13 liegt, kann es im Stand der Technik gegebenenfalls zu einer Kollision mit dem Objekt 17 kommen.

Es wird daher vorgeschlagen, einen zusätzlichen Überwachungsbereich 20 (schraffierte Fläche in Fig. 2) im Eckbereich 19 des Kraftfahrzeugs 1 zu definieren. Dieser Überwachungsbereich 20 wird dabei vorzugsweise auf derjenigen Seite des Kraftfahrzeugs 1 definiert, von welcher die eingeschlagenen Räder des Kraftfahrzeugs 1 weggerichtet sind. In Längsrichtung x betrachtet, wird der Überwachungsbereich 20 auf derjenigen Seite des Kraftfahrzeugs 1 definiert, von welcher die aktuelle Fahrtrichtung weggerichtet ist. Der Überwachungsbereich 19 grenzt dabei vorzugsweise an die Seitenflanke 5 bzw. 6 des Kraftfahrzeugs 1 an.

Im Ausführungsbeispiel gemäß Fig. 2 ist der Überwachungsbereich 20 ein rechteckiger Bereich neben dem Kraftfahrzeug 1. Eine in Fahrzeugquerrichtung y bemessene Breite 21 des Überwachungsbereichs 20 wird dabei in Abhängigkeit von dem aktuellen Lenkwinkel bestimmt. Je größer der aktuelle Lenkwinkel ist, desto größer ist die Breite 21 des Überwachungsbereichs 20. Ein Überwachungsbereich 20 für einen geringeren Lenkwinkel ist dabei in Fig. 3 dargestellt. Es kann auch vorgesehen sein, dass der Überwachungsbereich 20 nur dann definiert bzw. zur Ausgabe des nicht-optischen Warnsignals 12 berücksichtigt wird, wenn der Lenkwinkel einen vorgegebenen Grenzwert überschreitet. Unterhalb dieses Grenzwerts kann die Breite 21 des Überwachungsbereichs 20 auf null eingestellt werden.

Wird der Überwachungsbereich 20 definiert, so werden zur Ausgabe des nicht-optischen Warnsignals 12 auch Objekte berücksichtigt, die sich innerhalb des Überwachungsbereichs 20 befinden. Wird innerhalb des Überwachungsbereichs 20 ein Objekt 17 detektiert, erfolgt die Ausgabe des nicht-optischen Warnsignals 12.

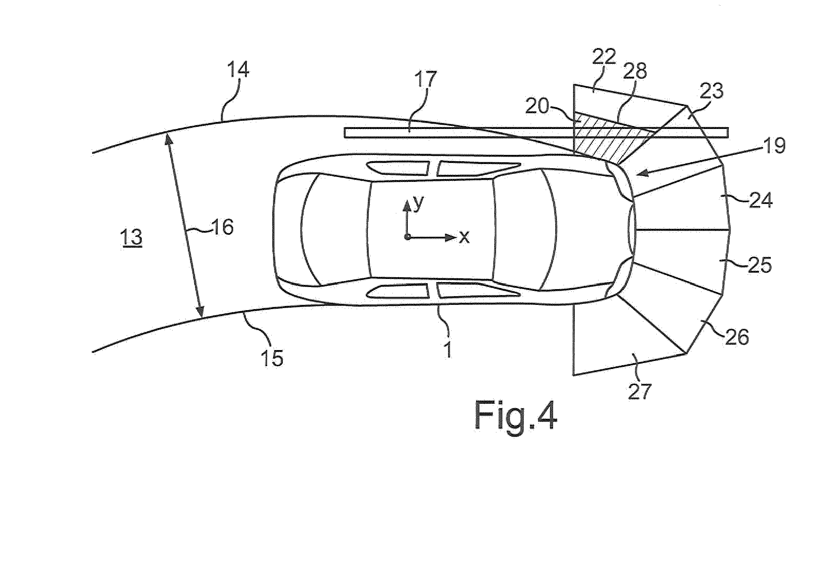

Eine alternative Ausführungsform ist in Fig. 4 dargestellt. Zur Festlegung des Überwachungsbereichs 20 wird hier das System der optischen Ausgabeeinrichtung 10 verwendet, bei welchem zu dem Kraftfahrzeug 1 eine Vielzahl von virtuellen Sektoren 22 bis 27 definiert werden, welche an das Kraftfahrzeug 1 sowie aneinander angrenzen und um das Kraftfahrzeug 1 verteilt sind. Beispielsweise kann zu jedem Abstandssensor 4 jeweils ein derartiger Sektor 22 bis 27 definiert werden. Die optische Ausgabe auf der Ausgabeeinrichtung 10 kann beispielsweise ein Bild des Kraftfahrzeugs 1 mit einer optischen Darstellung der Sektoren 22 bis 27 beinhalten. Wird dann in einem der Sektoren 22 bis 27 ein Objekt 17 detektiert, kann dieser Sektor 22 bis 27 optisch hervorgehoben werden. Die Anzahl der Sektoren 22 bis 27 ist in Fig. 4 lediglich beispielhaft dargestellt und kann grundsätzlich beliebig sein. Solche Sektoren 22 bis 27 können auch zu dem Heckbereich des Kraftfahrzeugs 1 definiert werden oder es ist auch möglich, dass derartige Sektoren 22 bis 27 vollumfänglich um das Kraftfahrzeug 1 herum verteilt sind.

Zur Definition des Überwachungsbereichs 20 wird dann einer der Sektoren 22 bis 27 ausgewählt, hier beispielsweise der Sektor 22. Der Überwachungsbereich 20 (schraffierte Fläche) wird dabei als Teilbereich des ausgewählten Sektors 22 bis zu einem Entfernungswert 28 von dem Kraftfahrzeug 1 bestimmt, welcher insbesondere in Abhängigkeit von dem aktuellen Lenkwinkel eingestellt wird. Die Größe des Überwachungsbereichs 20 hängt also von dem aktuellen Lenkwinkel ab. Wird nun innerhalb dieses Überwachungsbereichs 20 ein Objekt 17 detektiert, so wird auch das nicht-optische Warnsignal 12 ausgegeben.

Die Auswahl des Sektors 22 bis 27, in welchem der Überwachungsbereich 20 definiert wird, und somit die Bestimmung der Position des Überwachungsbereichs 20 erfolgt dabei insbesondere ebenfalls in Abhängigkeit von dem aktuellen Lenkwinkel. Bei nach links eingeschlagenen Rädern kann bei einer Rückwärtsfahrt beispielsweise einer der rechten Sektoren 25 bis 27 ausgewählt werden. Sind die Räder nach rechts eingeschlagen, kann einer der linken Sektoren 22 bis 24 ausgewählt werden.

## Patentansprüche

1. Verfahren zum Warnen des Fahrers eines Kraftfahrzeugs (1) vor einer Kollisionsgefahr durch Ausgeben eines nicht-optischen Warnsignals (12) mittels eines Kollisionswarnungssystems (2) des Kraftfahrzeugs (1), wobei durch das Kolüsionswarnungssystem (2) ein aktueller Lenkwinkel des Kraftfahrzeugs (1) erfasst wird und abhängig von dem aktuellen Lenkwinkel ein virtueller Fahrschlauch (13) bestimmt wird, welcher durch das Kraftfahrzeug (1) bei dem aktuellen Lenkwinkel voraussichtlich durchfahren wird, und wobei zum Ausgeben des nicht-optischen Warnsignals (12) innerhalb des Fahrschlauchs (13) detektierte Objekte (17) durch das Kollisionswarnungssystem (2) berücksichtigt werden,
**dadurch gekennzeichnet, dass**
zusätzlich zu dem Fahrschlauch (13) ein virtueller Überwachungsbereich (20) in einem Eckbereich (19) des Kraftfahrzeugs (1) bestimmt wird und das nicht-optische Warnsignal (12) auch bei Fehlen eines Objekts (17) innerhalb des Fahrschlauchs (13) dann ausgegeben wird, wenn innerhalb des zusätzlichen Überwachungsbereichs (20) ein Objekt (17) durch das Kollisionswarnungssystem (2) detektiert wird.

2. Verfahren nach Anspruch 1,
**dadurch gekennzeichnet, dass**
der zusätzliche Überwachungsbereich (20) in Abhängigkeit von dem aktuellen Lenkwinkel festgelegt wird.

3. Verfahren nach Anspruch 2,
**dadurch gekennzeichnet, dass**
der zusätzliche Überwachungsbereich (20) nur dann bestimmt oder zur Ausgabe des nicht-optischen Warnsignals (12) berücksichtigt wird, wenn der aktuelle Lenkwinkel größer als ein vorgegebener Grenzwert ist.

4. Verfahren nach Anspruch 2 oder 3,
**dadurch gekennzeichnet, dass**
zumindest eine Abmessung (21, 28) des zusätzlichen Überwachungsbereichs (20) und/oder eine Position des zusätzlichen Überwachungsbereichs (20) in Abhängigkeit von dem aktuellen Lenkwinkel festgelegt wird/werden.

5. Verfahren nach einem der vorhergehenden Ansprüche,
**dadurch gekennzeichnet, dass**
das Detektieren des Objekts (17) innerhalb des zusätzlichen Überwachungsbereichs (20) mittels eines an einer Seitenflanke (5, 6) des Kraftfahrzeugs (1) angeordneten Abstandssensors (4) erfolgt.

6. Verfahren nach einem der vorhergehenden Ansprüche,
**dadurch gekennzeichnet, dass**
der zusätzliche Überwachungsbereich (20) zumindest bei einer Rückwärtsfahrt des Kraftfahrzeugs (1) zur Ausgabe des nicht-optischen Warnsignals (12) berücksichtigt wird.

7. Verfahren nach einem der vorhergehenden Ansprüche,
**dadurch gekennzeichnet, dass**
als der Überwachungsbereich (20) ein an eine Seitenflanke (5, 6) des Kraftfahrzeugs (1) angrenzender, insbesondere rechteckiger, Bereich definiert wird.

8. Verfahren nach Anspruch 7,
**dadurch gekennzeichnet, dass**
eine in Fahrzeugquerrichtung (y) bemessene Breite (21) des Überwachungsbereichs (20) in Abhängigkeit von dem aktuellen Lenkwinkel eingestellt wird.

9. Verfahren nach einem der Ansprüche 1 bis 6,
**dadurch gekennzeichnet, dass**
zu dem Kraftfahrzeug (1) eine Vielzahl von um das Kraftfahrzeug (1) verteilten Sektoren (22, 27), insbesondere fester Größe, definiert werden und nach Detektion eines Objekts (17) in einem der Sektoren (22, 27) eine Information über diese Detektion mittels einer optischen Ausgabeeinrichtung (10) des Kraftfahrzeugs (1) optisch ausgegeben wird, wobei für den zusätzlichen Überwachungsbereich (20) zumindest einer der Sektoren (22, 27) ausgewählt wird und der zusätzliche Überwachungsbereich (20) als ein Teilbereich des ausgewählten Sektors (22, 27) bestimmt wird.

10. Verfahren nach Anspruch 9,
**dadurch gekennzeichnet, dass**
der zusätzliche Überwachungsbereich (20) als ein Teilbereich des ausgewählten Sektors (22, 27) bis zu einem Entfernungswert (28) von dem Kraftfahrzeug (1) bestimmt wird, welcher in Abhängigkeit von dem aktuellen Lenkwinkel eingestellt wird.

11. Verfahren nach Anspruch 9 oder 10,
**dadurch gekennzeichnet, dass**
die Auswahl des zumindest einen Sektors (22, 27) in Abhängigkeit von dem aktuellen Lenkwinkel erfolgt.

12. Kollisionswarnungssystem (2) zum Warnen des Fahrers eines Kraftfahrzeugs (1) vor einer Kollisionsgefahr, mit einer Detektionseinrichtung (3) zum Detektieren eines fahrzeugexternen Objekts (17), mit einer nicht-optischen Ausgabeeinrichtung (9) zum Ausgeben eines nicht-optischen Warnsignals (12), und mit einer Steuereinrichtung (8), die dazu ausgelegt ist, abhängig von einem aktuellen Lenkwinkel des Kraftfahrzeugs (1) einen virtuellen Fahrschlauch (13) zu bestimmen, welcher durch das Kraftfahrzeug (1) bei dem aktuellen Lenkwinkel voraussichtlich durchfahren wird, und die Ausgabeeinrichtung (9) zum Ausgeben des nicht-optischen Warnsignals (12) unter Berücksichtigung von innerhalb des Fahrschlauchs (13) detektierten Objekten anzusteuern,
**dadurch gekennzeichnet, dass**
die Steuereinrichtung (8) dazu ausgelegt ist, zusätzlich zu dem Fahrschlauch (13) einen virtuellen Überwachungsbereich (20) in einem Eckbereich (19) des Kraftfahrzeugs (1) zu bestimmen und die Ausgabeeinrichtung (9) zum Ausgeben des nicht-optischen Warnsignals (12) auch bei Fehlen eines Objekts (17) innerhalb des Fahrschlauchs (13) dann anzusteuern, wenn innerhalb des zusätzlichen Überwachungsbereichs (20) die Detektionseinrichtung (3) ein Objekt (17) detektiert,

13. Kraftfahrzeug (1) mit einem Kollisionswarnungssystem (2) nach Anspruch 12.
